# EUROPÄISCHE PATENTSCHRIFT

(11) **EP 3 005 480 B1**
(45) Veröffentlichungstag und Bekanntmachung des Hinweises auf die Patenterteilung: **23.11.2022**
(21) Anmeldenummer: 14726978.1
(22) Anmeldetag: 27.05.2014
(51) Int. Cl.: H01Q 3/26, H01Q 3/36, H01Q 23/00

(54) **ELEKTRONISCH SCHWENKBARE GRUPPENANTENNE**
ELECTRONICALLY PIVOTABLE ARRAY ANTENNA
ANTENNE RÉSEAU ORIENTABLE ÉLECTRONIQUEMENT

(30) Priorität: 27.05.2013 DE 102013209844
(43) Veröffentlichungstag der Anmeldung: 13.04.2016
(73) Patentinhaber: IHP GmbH-Innovations for High Performance Microelectronics / Leibniz-Institut für innovative Mikroelektronik, 15236 Frankfurt / Oder (DE)
(72) Erfinder: GRASS, Eckhard, 12589 Berlin (DE); MELIANI, Chafik, 12555 Berlin (DE)
(74) Vertreter: Eisenführ Speiser
(86) Internationale Anmeldenummer: PCT/EP2014/060986
(87) Internationale Veröffentlichungsnummer: WO 2014/191425

(56) Entgegenhaltungen:
- US-A- 5 821 901
- US-A- 6 002 365
- US-A1- 2009 256 748
- TOSHIHIKO NISHIMURA ET AL: "Beam Scan Using the Quasi-Optical Antenna Mixer Array", IEEE TRANSACTIONS ON ANTENNAS AND PROPAGATION, IEEE SERVICE CENTER, PISCATAWAY, NJ, US, Bd. 47, Nr. 7, 1. Juli 1999 (1999-07-01), XP011003590, ISSN: 0018-926X
- YEN-HORNG CHEN ET AL: "Active phase array using injection-locked oscillators", MICROWAVE CONFERENCE, 2001. APMC 2001. 2001 ASIA-PACIFIC DECEMBER 3-6, 201, PISCATAWAY, NJ, USA,IEEE, PISCATAWAY, NJ, USA, 3. Dezember 2001 (2001-12-03), Seiten 819-822vol.2, XP031437903, ISBN: 978-0-7803-7138-5

## Beschreibung

Die Erfindung betrifft eine phasengesteuerte Gruppenantenne (auch Phased-Array-Antenne genannt) mit elektronisch veränderbarem Antennendiagramm und ein Verfahren zum elektronischen Steuern des Antennendiagramms einer solchen phasengesteuerten Gruppenantenne.

Bei einer phasengesteuerten Gruppenantenne erfolgt eine Bündelung der Strahlungsenergie durch Anordnung und Verschaltung einzelner Antennenelemente (Einzelstrahler). Wenn sich die Einzelstrahler unterschiedlich ansteuern lassen, ist das Antennendiagramm der Antenne elektronisch schwenkbar. Die Bündelung ist umso stärker, je größer die Querausdehnung der Antenne ist. Bei zweidimensionalen Antennenfeldern kann das Antennendiagramm in vertikaler und horizontaler Richtung gebündelt werden. Durch gezielte Abweichung der Phasenlage kann das Antennendiagramm (auch Richtdiagramm genannt) asymmetrisch beeinflusst werden.

Eine solche Gruppenantenne nutzt die Phasenverschiebung der in einer Matrix angeordneten Sendeelemente, um durch Interferenz eine Bündelung zu erzielen. Die Sendeenergie wird in der gewünschten Richtung verstärkt, während die unerwünschten Richtungen durch destruktive Interferenz ausgelöscht werden.

Die einzelnen Antennenelemente benötigen hierbei keine Bündelungseinrichtungen.

Wird eine unterschiedliche Phasendifferenz eingestellt, indem z. B. der Phasenwinkel der äußeren Elemente nach und der der inneren vorgestellt wird, so wird die Bündelung der Gesamtantenne verändert, d.h. die Antennendiagrammform ändert sich. Für ein sehr schmales Antennendiagramm werden sehr viele Antennenelemente benötigt, deren Phasendifferenz zwischen den Strahlern sich zum Rand der Antennengruppe hin addieren. Die zur Phasenschiebung verwendeten Phasenschieber müssen also eine Phasenverschiebung von fast 360° erreichen und diese Phasenverschiebung muss extrem schnell realisiert werden. In der Praxis werden verschiedene Verzögerungselemente verwendet, die bei einem beispielweise mit einem 16-Bit-Steuerwort geschalteten 4-Bit-Phasenschieber in Schritten von 22,5° in die Speiseleitung geschaltet werden. Dabei kann das Steuerwort auch eine Information zur Adressierung enthalten.

Lineare Gruppenantennen bestehen aus Zeilen, die gemeinsam über einen Phasenschieber gesteuert werden können. Phasenschieber können in an sich bekannter Weise realisiert werden, auch als Verzögerungselemente. Planare Gruppenantennen können aus Einzelelementen mit jeweils einem Phasenschieber pro Element bestehen. Die Elemente werden wie in einer Matrix angeordnet, wobei die ebene Anordnung aller Elemente die gesamte Gruppenantenne bildet.

Gruppenantennen können leitungsgespeist sein, dann wird die Energie durch Koaxialkabel, Hohlleiter oder andere Hochfrequenzzuführleitungen (HF-Zuführleitungen) seriell oder parallel zu den Antennenelementen geführt.

Alternativ dazu kann die Speisung auch durch einen zentralen Strahler, also mit bereits abgestrahlter Energie erfolgen. Dabei handelt es sich dann um strahlungsgespeiste Gruppenantennen.

Ferner unterscheidet man noch zwischen einer Serienspeisung, bei der die Strahlerelemente nacheinander mit Sendeleistung und größer werdender Phasenverschiebung durch länger werdende Zuleitung versorgt werden, und einer Parallelspeisung, bei der jedes Strahlerelement mit gleich langer Zuleitung und demzufolge gleichphasig versorgt wird. Bei der Parallelspeisung kann somit die Länge der Zuleitungen bei der Berechnung der Phasenverschiebung außer Acht bleiben.

Mit phasengesteuerten Gruppenantennen lassen sich somit elektromagnetische Wellen bündeln und elektronisch in eine bestimmte Richtung steuern. Eine solche gerichtete Abstrahlung wird auch als Beamforming bezeichnet. Beamforming kann dazu dienen, die Entfernung der drahtlosen Datenübertragung oder Radaranwendung zu erhöhen, und Interferenzen sowie Mehrwegeausbreitung zu verringern. Im Falle der Radaranwendungen kann mithilfe von Beamforming eine räumliche Auflösung der Radar-Echos erreicht werden.

Um möglichst scharf gebündelte Antennendiagramme erzielen zu können, sind phasengesteuerte Gruppenantennen vorzugsweise mit einer Vielzahl (beispielsweise 1024) von Antennenelementen ausgestattet. Zur elektronischen Einstellung der Strahlrichtung kann typischerweise für jedes einzelne Antennenelement die Phase und Amplitude separat einstellbar sein. Wie bereits erwähnt, werden hierfür typischerweise digitale Steuersignale an eine Vielzahl (z. B. 1024) von Phasenschieber-Schaltkreisen geführt. Diese Verteilung der digitalen Steuerinformation erfordert eine Vielzahl von Leitungen und damit ein kompliziertes Layout eines Antennenmoduls. Gegebenenfalls müssen zusätzliche Metallebenen für die Zuführung der entsprechenden digitalen Signale vorgesehen werden, wodurch sich der Herstellungsaufwand erhöht.

Die Druckschriften US 5,821,901 und US 5,986,590 offenbaren eine phasengesteuerte Gruppenantenne, bei der die Steuersignale auf dieselbe Trägerfrequenz moduliert werden, wie die zu übertragenden Hochfrequenz (HF)-Nutzsignale. Dies führt zu einem hohen Modulations- und Schaltungsaufwand, um eine Trennung zwischen Nutzsignalen und Steuersignalen sicherzustellen.

Die Druckschriften US 6,002,365 und XP11003590 offenbaren weitere phasengesteuerte Gruppenantennen.

Das Dokument US 2009/0256748 A1 beschreibt ein phasengesteuertes Array-System mit einer Vielzahl von Array-Elementen, einem Strahlsteuerungsrechner; mehreren Dämpfungs- und Phasen-Steuerelementen zur Steuerung von Dämpfung und Phase der Energie, sowie ein Einspeisenetzwerk zum Einspeisen von Speisephase- und Dämpfungs-Daten. Das Einspeisenetzwerk umfasst mindestens einen eine drahtlose Slave-Empfangseinheit, die mit einem entsprechenden Dämpfungs- und Phasensteuerungselementen verbunden ist; und eine drahtlose Master-Sendeeinheit, die an den Strahlsteuerungsrechner gekoppelt ist und in drahtloser Kommunikation mit dem mindestens einer der Vielzahl von drahtlosen Slave-Empfangseinheiten zum Senden der Phasen- und Dämpfungsdaten zu mindestens einem der Dämpfungs- und PhasenSteuerelemente. Die Slave-Empfangseinheit und die Master-Sendeeinheit sind Bluetooth-Einheiten und bilden ein Spread-Spectrum-Kommunikations-System.

Es ist Aufgabe der vorliegenden Erfindung, eine phasengesteuerte Gruppenantenne und ein Steuerverfahren für eine solche Gruppenantenne bereitzustellen, durch die der Schaltungsaufwand für die Zuführung der Steuerinformation verringert werden kann.

Gemäß einem ersten Aspekt der vorliegenden Erfindung wird eine phasengesteuerte Gruppenantenne mit elektronisch veränderbaren Antennendiagramm gemäß Anspruch 1 vorgeschlagen.

Die Gruppenantenne hat mindestens zwei phasengesteuerten Antennenelemente zum Senden oder Empfangen von Nutzsignalkomponenten mit verschiedenen Phasenlagen, über mindestens zwei Phasensteuerelemente; und mindestens zwei den Phasensteuerelementen zugeordneten Empfangselemente zum Empfangen rundübertragener Steuersignale für die Phasensteuerelemente in einem vom Frequenzband der Nutzsignalkomponenten abweichenden Frequenzband, wobei die Empfangselemente ausgestaltet sind zum Detektieren der auf Zuführleitungen für die Nutzsignalkomponenten der phasengesteuerten Antennenelemente rundübertragenen Steuersignale.

Eine Rundübertragung wird im vorliegenden Technikgebiet gemäß dem heute üblicheren englischen Sprachgebrauch auch als Broadcast-Übertragung bezeichnet. Beide Begriffe werden in der vorliegenden Anmeldung mit gleicher Bedeutung nebeneinander verwendet.

Gemäß einem zweiten Aspekt der vorliegenden Erfindung wird eine Steuervorrichtung gemäß Anspruch 10 zum Steuern der phasengesteuerten Gruppenantenne vorgeschlagen.

Die Steuervorrichtung hat eine Schnittstelle zum Empfangen von Steuersignalen für mindestens zwei phasengesteuerte Antennenelemente, eine Signalverarbeitungseinheit zum Verarbeiten der Steuersignale für eine Broadcast-Übertragung zu der phasengesteuerten Gruppenantenne, und eine Sendeeinheit zum Rundübertragen der verarbeiteten Steuersignale zu der phasengesteuerten Gruppenantenne in einem vom Frequenzband von Nutzsignalkomponenten der Gruppenantenne abweichenden Frequenzband, wobei die Sendeeinheit ausgestaltet ist zum Rundübertragen der verarbeiteten Steuersignale über Zuführleitungen für Nutzsignalkomponenten der phasengesteuerten Gruppenantenne.

Gemäß einem dritten Aspekt der vorliegenden Erfindung wird ein Verfahren gemäß Anspruch 15 zur elektronischen Steuerung des Antennendiagramms einer phasengesteuerten Gruppenantenne vorgeschlagen.

Das Verfahren umfasst Schritte des Empfangens von Steuersignalen für mindestens zwei phasengesteuerte Antennenelemente, des Verarbeitens der Steuersignale für eine Broadcast-Übertragung zu den phasengesteuerten Antennenelementen; und des Rundübertragens der verarbeiteten Steuersignale zu den phasengesteuerten Antennenelementen unter Verwendung von Zuführleitungen für Nutzsignalkomponenten der phasengesteuerten Antennenelemente, in einem vom Frequenzband der Nutzsignalkomponenten abweichenden Frequenzband. Gemäß den vorgenannten Aspekten der vorliegenden Erfindung erfolgt die Zuführung der Steuersignale über ein Rundübertragungs- oder Broadcast-Verfahren in einem vom Frequenzband der Nutzsignalkomponenten abweichenden Frequenzband. Somit kann auf zusätzliche Signale und Leitungen auf dem Antennenmodul verzichtet werden und die Steuerinformation kann auf einfache Weise detektiert und empfangen werden. Erfindungsgemäß werden die digitale Steuerinformationen über die ohnehin vorhandenen HF-Leitungen zu den Steuerschaltkreisen der Antennenelemente übertragen. Die Datenübertragung zu den Antennenelementen der phasengesteuerten Gruppenantenne kann somit drahtgebunden im Frequenzmultiplex-Verfahren erfolgen, mit dem Ziel einer Minimierung der Anzahl von Zuführleitungen zu den Antennenelementen und der Verbesserung der Flexibilität und Rekonfigurierbarkeit. Dadurch kann die Anzahl der Metallebenen für Steuerleitungen im Antennenmodul minimiert werden. Ferner kann die Beeinflussung der Abstrahlcharakteristik (Antennendiagramm) der Antennenelemente aufgrund zusätzlicher Leitungen verringert werden.

Zur Broadcast-Übertragung von Funksignalen können die Empfangselemente der phasengesteuerten Gruppeantenne eigene Empfangsantennen für die Steuerinformation aufweisen. Entsprechend kann die Sendeeinheit der Steuervorrichtung eine eigene Antenne aufweisen zum zusätzlichen Funkübertragen der verarbeiteten Steuersignale.

Bei einer optischen Broadcast-Übertragung können die Empfangselemente der Gruppenantenne optische Detektoren aufweisen, wie beispielsweise Fotodioden oder dergleichen. In diesem Falle kann die Sendeeinheit der Steuervorrichtung ausgestaltet sein zum zusätzlichen optischen Übertragen der verarbeiteten Steuersignale, beispielsweise mittels eines optischen Senders.

Bei der erfindungsgemäßen Broadcast-Übertragung der Steuersignale unter Verwendung der vorhanden Zuführleitungen für die Nutzsignalkomponenten der phasengesteuerten Antennenelemente sind die Empfangselemente der Gruppenantenne ausgestaltet zum Detektieren der rundübertragenen Steuersignale.

Dabei kann die Signalverarbeitungseinheit der Steuervorrichtung ausgestaltet sein, die Gruppenantenne durch Zuführen eines Konfigurationssteuersignals in einem Konfigurationsmodus umzuschalten, bei dem die Zuführleitungen zur Übertragung der verarbeiteten Steuersignale freigeschaltet werden, um gegenseitige Beeinflussungen zwischen den Nutzsignalkomponenten und den Steuersignalen zu vermeiden.

Vorzugsweise kann die Signalverarbeitungseinheit dann ausgestaltet sein, die verarbeiteten Steuersignale unter Verwendung eines umtastenden Modulationsverfahrens auf eine Trägerfrequenz zu modulieren, wobei die Steuersignale im Frequenzmultiplex in einem vorbestimmten Frequenzband rundübertragen werden.

Die Gruppenantenne kann ausgestaltet sein, im Ansprechen auf das Konfigurationssteuersignal in einen Konfigurationsmodus umzuschalten. Ferner kann die Gruppenantenne ausgestaltet sein, die Zuführleitungen für die Nutzsignalkomponenten im Konfigurationsmodus zur Übertragung der Steuersignale freizuschalten. In diesem Falle können die Empfangselemente dann vorzugsweise ausgestaltet sein, eine Taktrückgewinnung anhand der rundübertragenen Steuersignale durchzuführen.

Bei einer Broadcast-Übertragung der Steuersignale im Frequenzmultiplex-Verfahren können die Empfangselemente ausgestaltet sein, die rundübertragenen Steuersignale über eine Filteroperation in einem vorbestimmten Frequenzband zu detektieren. Bei der Filteroperation kann es sich vorzugsweise um eine Tiefpassfilterung handeln.

Gemäß einer vorteilhaften Weiterbildung der vorliegenden Erfindung können die Empfangselemente der Gruppenantenne als Router ausgestaltet sein, zum Empfangen und Weiterleiten der Steuersignale in einer Broadcast-, Multicast- oder Unicast-Betriebsart.

Im Folgenden werden Merkmale und Vorteile der erfindungsgemäßen Gruppenantenne im Zusammenhang mit der Beschreibung von Ausführungsbeispielen unter Bezugnahme auf die beiliegenden Figuren näher erläutert. Es zeigen:
- Fig. 1: ein schematisches Blockschaltbild eines Gruppenantennensystems gemäß verschiedenen Ausführungsbeispielen der vorliegenden Erfindung;
- Fig. 2: ein Gruppenantennenelement mit Funksteuerung;
- Fig. 3: ein Gruppenantennenelement mit optischer Steuerung; und
- Fig. 4: ein Gruppenantennenelement mit Signalextraktion gemäß einem Ausführungsbeispiel der vorliegenden Erfindung.

Es folgt nun eine Beschreibung von Ausführungselementen basierend auf einer phasengesteuerten Gruppenantenne mit rundübertragener Steuerinformation zur Steuerung von Phasenschieber-Schaltkreisen in Gruppenantennenelementen der Gruppenantenne.

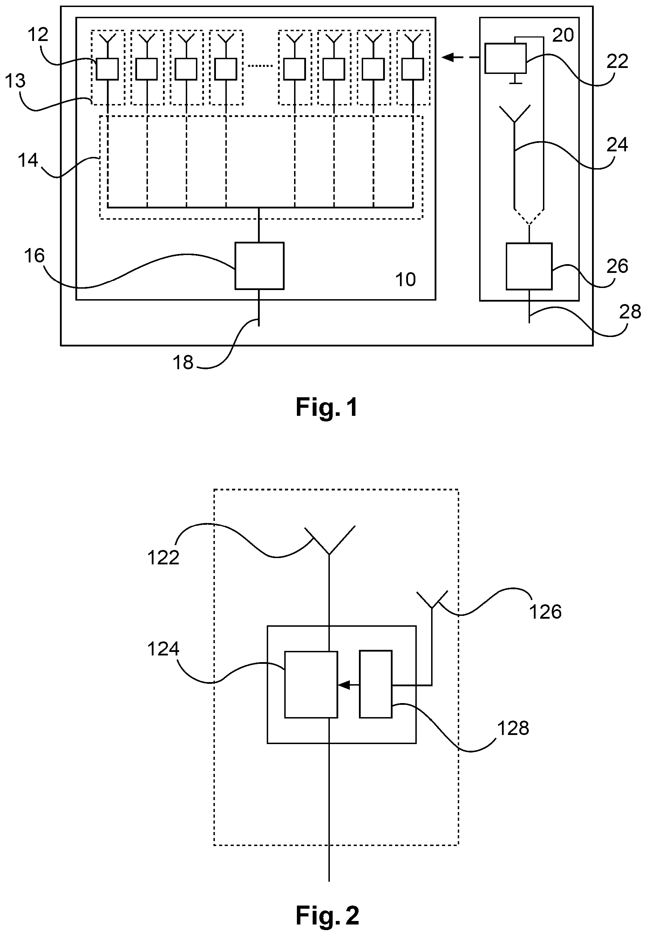

Fig. 1 zeigt ein schematisches Blockschaltbild eines Gruppenantennensystems mit phasengesteuerter Gruppenantenne 10 und Steuermodul 20 zur Rundübertragung der Steuerinformation in einem vom Frequenzbereich der Nutzsignalkomponenten der Gruppenantenne 10 abweichenden Frequenzband.

Gemäß Fig. 1 weist die phasengesteuerte Gruppenantenne 10 eine Vielzahl von phasengesteuerten Gruppenantennenelementen 13 auf, mit jeweils einer HF-Endstufe 12 mit Empfangsteil zum Empfangen der rundübertragenen Steuerinformation und einem Phasenschieber, der in Abhängigkeit der empfangenen Steuerinformation gesteuert wird. Die Gruppenantennenelemente 13 werden über HF-Zuführleitungen 14 aus einer HF-Einheit 16 für das Gesamtmodul parallel gespeist, wobei das zu sendende Nutzsignal über einen HF-Eingang 18 zugeführt wird. Im Empfangsvorgang werden die Nutzsignalkomponenten der einzelnen Gruppenantennenelemente 13 in der HF-Einheit 16 zusammengeführt und über einen entsprechenden Signalausgang, der dem vorgenannten HF-Eingang 18 entsprechen kann, bereitgestellt.

Das Steuermodul 20 weist einen Eingang oder eine Schnittstelle 28 zum Zuführen der rundzuübertragenden Steuerinformation für die Phasenschieber der Gruppenantennenelemente 13 auf. In einer Signalverarbeitungseinheit 26 wird die zugeführte Steuerinformation codiert und zur drahtgebundenen oder drahtlosen Broadcast-Übertragung verarbeitet. Bei einer hier nicht beanspruchten Broadcast-Übertragung allein per Funk wird die verarbeitete Steuerinformation einer Antenne 24 zugeführt, über die die verarbeitete Steuerinformation dann zu den Empfangsteilen der einzelnen Gruppenantennenelemente 13 übertragen wird. Bei einer hier nicht beanspruchten alleinigen optischen Broadcast-Übertragung wird die verarbeitete Steuerinformation einer Sendeeinheit 22 zugeführt, die einen elektrooptischen Wandler zur Abgabe eines entsprechenden optischen Signals aufweist. Erfindungsgemäß wird die verarbeitete Steuerinformation einem HF-Sender zum Einspeisen der rundzuübertragenden Steuerinformation in die HF-Zuführleitungen 14 der Gruppenantennenelemente 13 in einem vom Frequenzband der Nutzsignalkomponenten der Gruppenantenne 10 abweichenden Frequenzband zugeführt. Im letzteren Fall kann die Zuführung der rundzuübertragenden Steuerinformation über die HF-Einheit 16 des Gesamtmoduls der Gruppenantenne 10 erfolgen.

Das in Fig. 1 gezeigte Gruppenantennensystem kann somit eine Kombination aller Broadcast-Übertragungsmöglichkeiten mit Umschaltmöglichkeit aufweisen oder nur Rundübertagungsmöglichkeit über die HF-Zuführleitungen 14 Im ersteren Fall ergibt sich der Vorteil einer Redundanz im Falle einer Störung auf der vorgenannten Rundübertagungsstrecke über die HF-Zuführleitungen.

Fig. 2 zeigt ein detaillierteres schematisches Blockschaltbild eines Gruppenantennenelements 13 aus Fig. 1 für die Option der Funksteuerung bei einer Broadcast-Übertragung der Steuerinformation per Funksignal. Das phasengesteuerte Gruppenantennenelement gemäß Fig. 2 weist ein Antennenelement (Einzelstrahler) 122 auf, das über eine HF-Endstufe 124 mit Phasensteuerung gespeist wird. Die Phasensteuerung erfolgt dabei über eine Steuereinheit 128 mit eigener Funkantenne 126 zum Empfang der rundübertragenen Steuerinformation.

Somit kann die rundübertragene Steuerinformation des Steuermoduls 20 aus Fig. 1 über die Funkantenne 126 empfangen werden und mittels der Steuereinheit 128 zur Steuerung der Phase und/oder der Amplitude der über die HF-Zuführleitung 14 zugeführten Nutzsignalkomponente verwendet werden. Dabei kann die Steuereinheit 128 ausgestaltet sein zum Empfangen und Extrahieren der für das betreffende Antennenelement 122 vorgesehenen Steuerinformation (z.B. basierend auf einer enthaltenen Adress- oder Selektionsinformation) und zum Erzeugen und Anlegen eines entsprechenden digitalen Steuerworts an einen in der HF-Endstufe 124 vorhandenen digitalen Phasenschieber. Die Steuereinheit 128 mit der Funkantenne 126 bildet somit auch ein dem Phasenschieber in der HF-Endstufe 124 zugeordnetes zusätzliches Empfangselement für die rundübertragene Steuerinformation.

Selbstverständlich sind auch andere Phasenschieberoptionen über geschaltete Zuführleitungen mit unterschiedlicher Länge denkbar.

Gemäß dem ersten Ausführungsbeispiel kann somit zusätzlich eine Funkübertragung auf einer anderen (beispielsweise höheren) Frequenz als die Frequenz des Nutzsignals, zur Übertragung der Konfigurations- und Informationsdaten mit separater Antenne 126 erfolgen. Die Übertragung zwischen dem Steuermodul 20 und der Gruppenantenne 10 kann eine unidirektionale Übertragung der Steuerinformation (z.B. Selektions- und Konfigurationsdaten) sein. Es kann sich aber auch um eine bidirektionale Übertragung der Steuerinformation in einer Richtung (zur Gruppenantenne 10) und Empfangsparametern (wie beispielsweise Empfangsleistung (RSSI) Temperaturdaten, Health-Test-Daten, Kalibrierungsdaten etc.) In entgegengesetzter Richtung (zum Steuermodul 20) handeln. Die Rückübertragung kann auf einer anderen Frequenz wie die Hinübertragung erfolgen. Auch die Taktversorgung kann sich in Abhängigkeit der Übertragungsrichtung ändern, wobei eine permanente Taktversorgung über einen Gleichspannungspegel erfolgen kann und beispielsweise eine Umschaltung auf eine Taktversorgung im HF-Bereich (z. B. 60 Gigahertz) erfolgen kann, falls das HF-Modul 124 eine Information an das Steuermodul 20 gemäß Fig. 1 senden möchte.

Die HF-Endstufe 124 kann auch in Verbindung mit der Steuereinheit 128 und der Funkantenne 126 als Router ausgestaltet sein, sodass die einzelnen Gruppenantennenelemente 13 aus Fig. 1 in einer Router-Architektur eingebunden sind und Informationen in einem Broadcast-, Multicast- oder Unicast- Verfahren untereinander austauschen können. Dies ermöglicht eine gezielte, flexible und effizientere Übertragung der Steuerinformation zu den einzelnen Gruppenantennenelementen 13.

Zur Erhöhung der Übertragungssicherheit und Verringerung der Störanfälligkeit kann die Steuerinformation mit den Konfigurationsdaten auch in einem Codemultiplex-Verfahren unter Verwendung von Spreizcodes übertragen werden.

Die vorgenannten vorteilhaften Weiterbildungen in Verbindung mit der Ausgestaltung der HF-Endstufe 124 und der Steuereinheit 128, sowie der Übertragung der Steuerinformation, sind auch auf die nachfolgenden Ausführungsbeispiele übertragbar und es wird auf eine wiederholte dortige Nennung verzichtet.

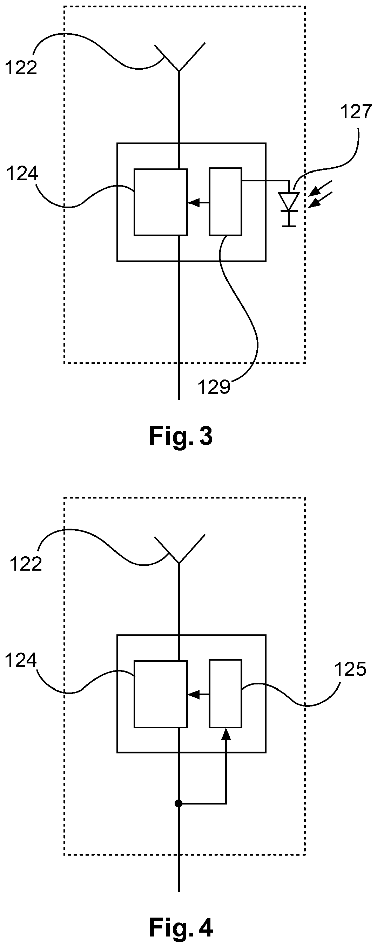

Fig. 3 zeigt ein detaillierteres schematisches Blockschaltbild eines Gruppenantennenelements mit optischer Steuerung basierend auf der rundübertragenen Steuerinformation gemäß einem zweiten Ausführungsbeispiel. Hierbei wird das Antennenelement (Einzelstrahler) 122 über eine HF-Endstufe 124 gespeist, die die rundübertragene Steuerinformation über eine Steuereinheit 129 empfängt, wobei die Steuereinheit 129 einen Fotodetektor 127 (beispielsweise eine Fotodiode oder ein anderes optoelektrisches Wandlerelement) aufweist zum Empfang eines von der Sendeeinheit 22 des Steuermoduls 20 rundübertragenen optischen Signals. Die erfindungsbezogene Funktionsweise der HF-Endstufe 124 und des Steuermoduls 129 entspricht dabei im Wesentlichen der in Verbindung mit dem ersten Ausführungsbeispiel beschriebenen Funktionsweise der HF-Endstufe 124 und des Steuermoduls 128 in Fig. 2. Davon abweichend kann die Steuereinheit 129 ausgestaltet sein, das von dem Fotodetektor 127 empfangene Signal einer Signalformungsoperation zur Erfassung der rundübertragenen digitalen Steuerinformation zu unterziehen. Die Steuereinheit 129 mit dem Fotodetetor 127 bildet somit ein dem Phasenschieber in der HF-Endstufe 124 zugeordnetes Empfangselement für die rundübertragene Steuerinformation. Eine entsprechende Signalverarbeitung kann natürlich auch im ersten Ausführungsbeispiel vorgesehen sein.

Fig. 4 zeigt ein detaillierteres schematisches Blockschaltbild eines Gruppenantennenelements mit Signalextraktion gemäß einem Ausführungsbeispiel der Erfindung.

In dem Ausführungsbeispiel erfolgt die Broadcast-Übertragung der Steuerinformation von dem Steuermodul 20 aus Fig. 1 zu der gesteuerten Gruppenantenne 10 über die bereits vorhandenen HF-Zuführleitungen 14 gemäß Fig. 1, so dass die Steuerinformation am Gruppenantennenelement durch Signalextraktion oder Detektion auf der individuellen HF-Zuführleitung 14 des betreffenden Gruppenantennenelements erfolgt. Zu diesem Zwecke wird die HF-Endstufe 124 des gesteuerten Gruppenantennenelements von einer Steuereinheit 125 gesteuert, der die Signale auf der HF-Zuführleitung 14 zugeführt werden und das ausgestaltet ist zum Extrahieren oder Detektieren der rundübertragenen Steuerinformation aus den Signalen auf der HF-Zuführleitung 14. Dabei kann die Steuerinformation für die verschiedenen Gruppenelemente 13 als serieller Datenstrom über die HF-Zuführleitungen 14 übertragen werden. Alternativ dazu kann ein zusätzliches Konfigurationssteuersignal vorgesehen sein, mittels dem die Gruppenantenne 10 in einen Konfigurationsmodus umgeschaltet werden kann. Dies kann so geschehen, dass die Gruppenantenne 10 die HF-Zuführleitungen 14 im Ansprechen auf das Konfigurationssteuersignal für die Übertragung der rundübertragenen Steuerinformation freigibt. Beispielsweise kann die HF-Einheit 16 für das Gesamtmodul ausgestaltet sein, im Ansprechen auf das Konfigurationssteuersignal den HF-Eingang 18 abzuschalten und das Ausgangssignal der Sendeeinheit 22 des Steuermoduls 20 auf die HF-Zuführleitungen 14 durchzuschalten.

Die rundübertragene Steuerinformation kann mit einem einfachen umtastenden Modulationsverfahren wie beispielsweise On-Off-Keying (OOK) über die HF-Zuführleitungen 14 unter Nutzung einer von der normalen Trägerfrequenz des Nutzsignals abweichenden Trägerfrequenz zu den Gruppenantennenelementen 13 übertragen werden. Dabei kann eine Taktrückgewinnung in den Steuereinheiten 125 aus dem modulierten Empfangssignal beispielsweise über eine Leistungsdetektion erfolgen. Die Steuereinheit 125 bildet somit ein dem Phasenschieber in der HF-Endstufe 124 zugeordnetes Empfangselement für die rundübertragene Steuerinformation.

Dabei werden die modulierten Signale der rundübertragenen Steuerinformation im Frequenzmultiplex in dem separaten Frequenzband auf den HF-Zuführleitungen 14 übertragen. Dieses Frequenzband kann beispielsweise ein Frequenzband mit niedriger Frequenz inklusive Gleichspannung sein, wobei eine Energieverbrauchsoptimierung durch höhere Impedanz bei niedrigen Frequenzen in vorteilhafter Weise erfolgen kann. Die rundübertragene Steuerinformation wird somit als Basisbandsignal übertragen und kann in der Steuereinheit 125 mittels eines entsprechenden Filters (Tiefpassfilter) extrahiert werden.

Durch eine solche Übertragung im Frequenzmulitplex kann die vorstehend beschriebene Umschaltung in den Konfigurationsmodus auch entfallen, da sich die Möglichkeit des gleichzeitigen Sendens/Empfangens im Nutzsignalfrequenzbereich und Konfigurierens der Gruppenantennenelemente realisieren lässt.

Die Broadcast-Übertragung der Steuerinformation gemäß den vorstehend beschriebenen Ausführungsbeispielen ermöglicht somit eine Verringerung der Anzahl physikalischer Leitungen der Gruppenantenne und somit eine Verringerung des Hardwareaufwands, die zu einer Verbesserung des Formfaktors eines entsprechenden Chipmoduls führt. Die Verwendung eines abweichenden Frequenzbands zur Übertragung der Steuerinformation führt dabei zu einer vereinfachten Extraktion der Steuerinformation an den jeweiligen Steuereinheiten der Antennenelemente. Bei einem Einsatz der vorstehend beschriebenen Router-Architektur kann zudem die digitale Aktivität des Antennensystems verringert werden, wodurch sich die elektromagnetische Verträglichkeit durch verringerte Interferenz bei gleichzeitigem Konfigurieren und HF-Betrieb der Gruppenantenne verbessert. Ähnliche Vorteile ergeben sich auch bei der optischen Übertragung und bei der Funkverteilung über separate Antennen.

Es sind auch hybride Varianten durch Kombination der vorgenannten Ausführungsbeispiele denkbar. Beispielsweise kann die Informationsübertragung vom Steuermodul 20 zu der Gruppenantenne 10 mit einem ersten Übertragungsverfahren (z.B. optische Übertragung oder per Funk) erfolgen und mit einem zweiten Übertragungsverfahren (über die vorhandenen Zuführleitungen) in rückwärtiger Richtung. Auch die Taktversorgung kann über ein eigenes Übertragungsverfahren erfolgen.

Wie bereits erwähnt, kann die vorstehend beschriebene Broadcast-Übertragung der Steuerinformation der Gruppenantennenelemente auch auf Gruppenempfangsantennen mit steuerbarer Empfangscharakteristik (Antennendiagramm) angewendet werden. Die HF-Endstufen 12 aus Fig. 1 können dabei als HF-Sendeempfangsmodule ausgeführt sein, die sowohl das Sende- als auch das Empfangssignal in ihrer Phase und Amplitude beeinflussen.

Das vorstehend beschriebene Gruppenantennensystem gemäß Fig. 1 kann als integriertes System ausgeführt sein, wobei sowohl das Steuermodul 20 als auch die gesteuerte Gruppenantenne 10 auf demselben Chipmodul integriert sind. Alternativ dazu kann das Steuermodul 20 auch auf einen separaten Chip oder als separate Schaltung oder als separates Gerät ausgeführt sein.

Zusammenfassend wurde die vorliegende Erfindung vorstehend anhand von Ausführungsbeispielen erläutert, die eine phasengesteuerte Gruppenantenne 10 mit elektronisch veränderbarem Antennendiagramm enthalten, wobei Steuersignale für mindestens zwei phasengesteuerte Antennenelemente 13 für eine Broadcast-Übertragung verarbeitet und zu den phasengesteuerten Antennenelementen 13 unter Verwendung von Zuführleitungen für Nutzsignalkomponenten der phasengesteuerten Antennenelemente in einem vom Frequenzband der Nutzsignalkomponenten der Gruppenantenne 10 abweichenden Frequenzband rundübertragen werden. Durch die Verwendung des Broadcast-Übertragungsverfahrens in einem abweichenden Frequenzband sind keine zusätzlichen Signale und Leitungen für die Gruppenantenne erforderlich, und die Komplexität der Gruppenantenne kann verringert sowie die Flexibilität und Rekonfigurierbarkeit verbessert werden.

## Patentansprüche

1. Phasengesteuerte Gruppenantenne (10) mit elektronisch veränderbarem Antennendiagramm, mit:
- mindestens zwei phasengesteuerten Antennenelementen (13) zum Senden oder Empfangen von Nutzsignalkomponenten mit verschiedenen Phasenlagen über mindestens zwei Phasensteuerelemente (12); und
- mindestens zwei den Phasensteuerelementen (12) zugeordneten Empfangselementen (126, 128; 127, 129; 125) zum Empfangen rundübertragener Steuersignale für die Phasensteuerelemente (12) in einem vom Frequenzband der Nutzsignalkomponenten abweichenden Frequenzband, **dadurch gekennzeichnet, dass**
- die Empfangselemente (126, 128; 127, 129; 125) ausgestaltet sind zum Detektieren der auf Zuführleitungen (14) für die Nutzsignalkomponenten der phasengesteuerten Antennenelemente (13) rundübertragenen Steuersignale.

2. Gruppenantenne nach Anspruch 1, wobei die Empfangselemente (126, 128) weiter Empfangsantennen (126) aufweisen zum Empfangen der rundübertragenen Signale als Funksignale und weiter optische Detektoren (127) aufweisen zum Empfangen der rundübertragenen Signale als optische Signale und die Gruppenantenne eine Umschaltmöglichkeit zwischen der Rundübertragung auf Zuführleitungen und der Rundübertragung als Funksignale und der Rundübertragung als optische Signale aufweist.

3. Gruppenantenne nach Anspruch 2, wobei die optischen Detektoren Fotodioden (127) aufweisen.

4. Gruppenantenne nach Anspruch 1, wobei die Gruppenantenne (10) ausgestaltet ist zum Umschalten in einen Konfigurationsmodus im Ansprechen auf den Empfang eines Konfigurationssteuersignals.

5. Gruppenantenne nach Anspruch 4, wobei die Gruppenantenne (10) ausgestaltet ist, die Zuführleitungen (14) für die Nutzsignalkomponenten im Konfigurationsmodus zur Übertragung der Steuersignale freizuschalten.

6. Gruppenantenne nach einem der vorgenannten Ansprüche, wobei die Empfangselemente (126, 128; 127, 129; 125) ausgestaltet sind, die Steuersignale mit nach einem umtastenden Modulationsverfahren eingeprägter Steuerinformation zu empfangen, und eine Taktrückgewinnung anhand der empfangenen rundübertragenen Steuersignale durchzuführen.

7. Gruppenantenne nach einem der der vorgenannten Ansprüche, wobei die Empfangselemente (125) ausgestaltet sind, die rundübertragenen Steuersignale über eine Filteroperation in einem vorbestimmten Frequenzband zu detektieren.

8. Gruppenantenne nach Anspruch 7, wobei die Filteroperation eine Tiefpassfilterung ist.

9. Gruppenantenne nach einem der vorgenannten Ansprüche, wobei die Empfangselemente (126, 128; 127, 129; 125) als Router ausgestaltet sind, zum Empfangen und Weiterleiten der Steuersignale in einer Broadcast-, Multicast- oder Unicast-Betriebsart untereinander.

10. Steuervorrichtung (20) zum Steuern einer phasengesteuerten Gruppenantenne (10) nach einem der vorgenannten Ansprüche mit elektronisch veränderbaren Antennendiagramm, mit:
- einer Schnittstelle (28) zum Empfangen von Steuersignalen für mindestens zwei phasengesteuerte Antennenelemente (13);
- einer Signalverarbeitungseinheit (26) zum Verarbeiten der Steuersignale für eine Rundübertragung zu der phasengesteuerten Gruppenantenne (10); und
- einer Sendeeinheit (22, 24) zum Rundübertragen der verarbeiteten Steuersignale zu der phasengesteuerten Gruppenantenne (10) in einem vom Frequenzband von Nutzsignalkomponenten der Gruppenantenne (10) abweichenden Frequenzband, wobei
- die Sendeeinheit (22) ausgestaltet ist zum Rundübertragen der verarbeiteten Steuersignale über Zuführleitungen (14) für Nutzsignalkomponenten der phasengesteuerten Gruppenantenne (10).

11. Steuervorrichtung nach Anspruch 10, wobei die Signalverarbeitungseinheit (26) ausgestaltet ist, die Gruppenantenne (10) durch Zuführen eines Konfigurationssteuersignals in einen Konfigurationsmodus umzuschalten, bei dem die Zuführleitungen (14) zur Übertragung der verarbeiteten Steuersignale freigeschaltet werden.

12. Steuervorrichtung nach Anspruch 10 oder 11, wobei die Signalverarbeitungseinheit (26) ausgestaltet ist, die verarbeiteten Steuersignale unter Verwendung eines umtastenden Modulationsverfahrens auf eine Trägerfrequenz des abweichenden Frequenzbands zu modulieren.

13. Steuervorrichtung nach einem der Ansprüche 10 bis 12, wobei die Sendeeinheit (22) weiter ausgestaltet ist zum optischen Übertragen des verarbeiteten Steuersignals und wobei die Sendeeinheit (22, 24) weiter eine Antenne (24) umfasst zum Funkübertragen des verarbeiteten Steuersignals.

14. Gruppenantennensystem mit einer phasengesteuerten Gruppenantenne (10) nach Anspruch 1 und einer Steuervorrichtung (20) nach Anspruch 10 zur Steuerung der Gruppenantenne (10).

15. Verfahren zur elektronischen Steuerung des Antennendiagramms einer phasengesteuerten Gruppenantenne (10) nach einem der Ansprüche 1 bis 9, mit den Schritten:
- Empfangen von Steuersignalen für mindestens zwei phasengesteuerte Antennenelemente (13);
- Verarbeiten der Steuersignale für eine Rundübertragung zu den phasengesteuerten Antennenelemente (13); und
- Rundübertragen der verarbeiteten Steuersignale zu den phasengesteuerten Antennenelementen (13) unter Verwendung von Zuführleitungen (14) für Nutzsignalkomponenten der phasengesteuerten Antennenelemente (13), in einem vom Frequenzband der Nutzsignalkomponenten abweichenden Frequenzband.

## Claims

1. Phased array antenna (10) with an electronically variable antenna pattern, having:
at least two phased antenna elements (13) for transmitting or receiving useful signal components having different phase positions via at least two phase control elements (12); and
at least two receiver elements (126, 128; 127, 129; 125) assigned to the phase control elements (12), for receiving broadcast control signals for the phase control elements (12) in a frequency band differing from the frequency band of the useful signal components, **characterised in that**
the receiver elements (126, 128; 127, 129; 125) are configured to detect control signals broadcast on feed lines (14) for the useful signal components of the phased antenna elements (13).

2. Array antenna according to claim 1, wherein the receiver elements (126, 128) further have receiver antennas (126) for receiving the broadcast signals as radio signals and further have optical detectors (127) for receiving the broadcast signals as optical signals, and the array antenna is capable of switching between broadcasting on feed lines and broadcasting as wireless signals and broadcasting as optical signals.

3. Array antenna according to claim 2, wherein the optical detectors have photodiodes (127).

4. Array antenna according to claim 1, wherein the array antenna (10) is configured to switch to a configuration mode in response to receiving a configuration control signal.

5. Array antenna according to claim 4, wherein the array antenna (10) is configured to release the feed lines (14) for the useful signal components in the configuration mode in order to transmit the control signals.

6. Array antenna according to any of the preceding claims, wherein the receiver elements (126, 128; 127, 129; 125) are configured to receive the control signals with control information stamped according to a keying modulation method, and to perform a clock recovery on the basis of the received broadcast control signals.

7. Array antenna according to any of the preceding claims, wherein the receiver elements (125) are configured to detect the broadcast control signals by means of a filter operation in a predetermined frequency band.

8. Array antenna according to claim 7, wherein the filter operation is low-pass filtering.

9. Array antenna according to any of the preceding claims, wherein the receiver elements (126, 128; 127, 129; 125) are configured as routers for receiving and forwarding the control signals among one another in a broadcast, multicast or unicast operating mode.

10. Control device (20) for controlling a phased array antenna (10) according to any of the preceding claims with an electronically variable antenna pattern, having:
- an interface (28) for receiving control signals for at least two phased antenna elements (13);
- a signal processing unit (26) for processing the control signals for a broadcast to the phased array antenna (10); and
- a transmitter unit (22, 24) for broadcasting the processed control signals to the phased array antenna (10) in a frequency band differing from the frequency band of useful signal components of the array antenna (10), wherein
- the transmitter unit (22) is configured to broadcast the processed control signals via feed lines (14) for useful signal components of the phased array antenna (10).

11. Control device according to claim 10, wherein the signal processing unit (26) is configured to switch the array antenna (10), by feeding it a configuration control signal, into a configuration mode in which the feed lines (14) are released for transmission of the processed control signals.

12. Control device according to claim 10 or 11, wherein the signal processing unit (26) is configured to modulate the processed control signals onto a carrier frequency of the different frequency band using a keying modulation method.

13. Control device according to any of claims 10 to 12, wherein the transmitter unit (22) is further configured to optically transmit the processed control signal and wherein the transmitter unit (22, 24) further comprises an antenna (24) for wireless transmission of the processed control signal.

14. Array antenna system having a phased array antenna (10) according to claim 1 and a control device (20) according to claim 10 for controlling the array antenna (10).

15. Method for electronically controlling the antenna pattern of a phased array antenna (10) according to any of claims 1 to 9, having the steps of:
- receiving control signals for at least two phased antenna elements (13);
- processing the control signals for a broadcast to the phased antenna elements (13); and
- broadcasting the processed control signals to the phased antenna elements (13) using feed lines (14) for useful signal components of the phased antenna elements (13), in a frequency band differing from the frequency band of the useful signal components.

## Revendications

1. Antenne réseau à commande de phase (10) dont le diagramme d'antenne est modifiable électroniquement, avec :
- au moins deux éléments d'antenne commandés en phase (13) pour émettre ou recevoir des composantes de signal utiles avec des angles de phase différents via au moins deux éléments de commande de phase (12); et
- au moins deux éléments de réception (126, 128 ; 127, 129 ; 125) affectés aux éléments de commande de phase (12) pour recevoir des signaux de commande transmis par diffusion pour les éléments de commande de phase (12) dans une bande de fréquence qui diffère de la bande de fréquence des composantes utiles du signal, **caractérisé en ce que**
- les éléments de réception (126, 128 ; 127, 129 ; 125) sont adaptés pour détecter les signaux de commande diffusés sur des lignes d'alimentation (14) pour les composantes utiles du signal des éléments d'antenne commandés en phase (13).

2. Antenne réseau selon la revendication 1, dans laquelle les éléments de réception (126, 128) ont également des antennes de réception (126) pour recevoir les signaux de diffusion sous forme de signaux radio et en outre présentent des détecteurs optiques (127) pour recevoir les signaux de diffusion sous forme de signaux optiques et l'antenne réseau a une option de commutation entre la diffusion sur les lignes d'alimentation et la diffusion sous forme de signaux radio et la diffusion sous forme de signaux optiques.

3. Antenne réseau selon la revendication 2, dans laquelle les détecteurs optiques présentent des photodiodes (127).

4. Antenne réseau selon la revendication 1, dans lequel l'antenne réseau (10) est configuré pour passer à un mode de configuration en réponse à la réception d'un signal de commande de configuration.

5. Antenne réseau selon la revendication 4, dans laquelle l'antenne réseau (10) est conçue pour activer les lignes d'alimentation (14) des composantes utiles du signal dans le mode de configuration pour la transmission des signaux de commande.

6. Antenne réseau selon l'une des revendications précédentes, dans laquelle les éléments de réception (126, 128 ; 127, 129 ; 125) sont agencés pour recevoir les signaux de commande avec des informations de commande superposées par un procédé de modulation par déplacement, et pour effectuer une récupération d'horloge à l'aide des signaux de commande de diffusion reçus.

7. Antenne réseau selon l'une des revendications précédentes, dans laquelle les éléments de réception (125) sont configurés pour détecter les signaux de commande diffusés via une opération de filtrage dans une bande de fréquence prédéterminée.

8. Antenne réseau selon la revendication 7, dans laquelle l'opération de filtrage est un filtrage passe-bas.

9. Antenne réseau selon l'une des revendications précédentes, dans laquelle les éléments de réception (126, 128 ; 127, 129 ; 125) sont conçus comme des routeurs pour recevoir et retransmettre les signaux de commande en mode de diffusion, de multidiffusion ou de monodiffusion entre eux.

10. Dispositif de commande (20) pour la commande d'une antenne réseau à commande de phase (10) selon l'une des revendications précédentes à diagramme d'antenne électroniquement variable, avec :
une interface (28) pour recevoir des signaux de commande pour au moins deux éléments d'antenne réseau en phase (13);
une unité de traitement de signal (26) pour traiter les signaux de commande à diffuser vers l'antenne réseau à commande de phase (10); et
une unité émettrice (22, 24) pour diffuser les signaux de commande traités vers l'antenne réseau à commande de phase (10) dans une bande de fréquences s'écartant de la bande de fréquences des composantes de signal utile de l'antenne réseau (10), dans laquelle
l'unité émettrice (22) est conçue pour diffuser les signaux de commande traités via des lignes d'alimentation (14) pour des composantes de signal utiles de l'antenne réseau à commande de phase (10).

11. Dispositif de commande selon la revendication 10, dans lequel l'unité de traitement de signal (26) est conçue pour commuter l'antenne réseau (10) en fournissant un signal de commande de configuration dans un mode de configuration dans lequel les lignes d'alimentation (14) sont activées pour la transmission les signaux de commande traités.

12. Dispositif de commande selon la revendication 10 ou 11, dans lequel l'unité de traitement de signal (26) est agencée pour moduler les signaux de commande traités selon un procédé de modulation par modulation à une fréquence porteuse de la bande de fréquence différente.

13. Dispositif de commande selon l'une des revendications 10 à 12, dans lequel l'unité émettrice (22) est en outre configurée pour la transmission optique du signal de commande traité et dans lequel l'unité émettrice (22, 24) comprend en outre une antenne (24) pour la transmission radiodu signal de commande traité.

14. Système d'antenne réseau avec une antenne réseau à commande de phase (10) selon la revendication 1 et un dispositif de commande (20) selon la revendication 10 pour commander l'antenne réseau (10).

15. Procédé de commande électronique du diagramme d'antenne d'une antenne réseau à commande de phase (10) selon l'une quelconque des revendications 1 à 9, comprenant les étapes consistant à :
- recevoir des signaux de commande pour au moins deux éléments d'antenne réseau en phase (13);
- traiter les signaux de commande pour diffusion vers les éléments d'antenne réseau à commande de phase (13); et
- diffuser les signaux de commande traités vers les éléments d'antenne réseau à commande de phase (13) à l'aide de lignes d'alimentation (14) pour les composantes de signal utiles des éléments d'antenne réseau à commande de phase (13), dans une bande de fréquence s'écartant de la bande de fréquence des composantes de signal utiles.
